(19) Europäisches Patentamt

European Patent Office

Office européen des brevets

(11) Veröffentlichungsnummer: **0 224 651**
A1

(12) EUROPÄISCHE PATENTANMELDUNG

(21) Anmeldenummer: 86111317.3

(22) Anmeldetag: 16.08.86

(51) Int. Cl.⁴: **C08J 5/10** , C08L 21/00 ,
C08K 3/22

(30) Priorität: 02.11.85 DE 3538975

(43) Veröffentlichungstag der Anmeldung:
10.06.87 Patentblatt 87/24

(84) Benannte Vertragsstaaten:
AT BE CH DE FR GB IT LI LU NL SE

(71) Anmelder: **Continental Gummi-Werke
Aktiengesellschaft
Königsworther Platz 1 Postfach 169
D-3000 Hannover 1(DE)**

(72) Erfinder: **Fricke, Gerhard
Bärenriegelweg Nr. 6
D-8491 Lohberg(DE)**
Erfinder: **Hoffmann, Holger, Dr.
Pestalozzistrasse 15
D-3000 Hannover 91(DE)**
Erfinder: **Umland, Henning, Dr.
Barwegskoppel 16
D-2090 Winsen (Luhe)(DE)**

(54) **Kautschukmischung zur Direktbindung an metallischen Körpern oder an Glas.**

(57) Die Erfindung bezieht sich auf eine farbige oder rußgefüllte Kautschukhaftmischung zur Direktbindung an metallischen Körpern oder an Glas, auf den Grundlage von Natur-und/oder Synthesekautschuk, die Füllstoffe, Artivatoren, Weichmacher, ein Vulkisationsmittel und ein Haftsystem auf der Basis Resorcin/Hexamethylentetramin enthält. Um gute Haftwerte zu erzielen, wird vorgeschlagen, daß die Kautschukhaftmischung als weiterer Bestandteil eine anorganische Base enthält und daß die Füllstoffe, die im Falle einer farbigen Kautschukhaftmischung aus Metalloxiden und/oder Silikaten und/oder Karbonaten bestehen, in einem Anteil von 20 bis 100 Gew.-Teilen, bezogen auf 100 Gew.-Teile Kautschuk, vorhanden sind.

EP 0 224 651 A1

### Kautschukhaftmischung zur Direktbindung an metallischen Körpern oder an Glas

Die Erfindung betrifft eine farbige oder rußgefüllte Kautschukhaftmischung zur Direktbindung an metallischen Körpern oder an Glas, auf der Grundlage von Natur-und/oder Synthesekautschuk, die Füllstoffe, Aktivatoren, Weichmacher, ein Vulkanisationsmittel und ein Haftsystem auf der Basis Resorcin/Hexamethylentetramin enthält.

Es sind rußgefüllte Kautschukhaftmischungen zur Direktbindung an Metallen bekannt, bei denen ein Haftsystem Resorcin/Hexamethylentetramin zum Einsatz kommt. Durch relativ hohe Zugaben von Resorcin und Hexamethylentetramin ist es gelungen, eine gute Haftung an unterschiedlichen metallischen Oberflächen zu erzielen. Man hat es bisher jedoch nicht geschafft, eine farbige Universalhaftmischung zur Haftung an unterschiedlichen Metallen zu entwickeln.

Der Erfindung liegt deshalb die Aufgabe zugrunde, eine Kautschukhaftmischung zur Direktbindung an unterschiedlichen Metallkörpern anzugeben, die auch als farbige Kautschukmischung ausgebildet sein kann und mit der ausgezeichnete Haftwerte erzielbar sind.

Diese Aufgabe wird erfindungsgemäß dadurch gelöst, daß die Kautschukhaftmischung als weiteren Bestandteil eine anorganische Base enthält und daß die Füllstoffe, die im Falle einer farbigen Kautschukhaftmischung aus Metalloxiden und/oder Silikaten und/oder Karbonaten bestehen, in einem Anteil von 20 bis 100 Gew.-Teilen, bezogen auf 100 Gew.-Teile Kautschuk, vorhanden sind.

Die Erfindung bietet den Vorteil hoher Haftwerte für eine Gummi-Metallhaftung an Oberflächen von Messing, Zink und blankem Stahl, und zwar sowohl bezüglich farbiger als auch bezüglich rußgefüllter Kautschukhaftmischungen. Unter farbiger Kautschukhaftmischung sollen im Rahmen dieser Erfindung alle Haftmischungen verstanden werden, die entweder mit einem Farbstoff versehen sind oder als helle Haftmischung ausgebildet sind.

Als weiterer entscheidender Vorteil ist anzumerken, daß mit erfindungsgemäßen Kautschukhaftmischungen außerdem eine vorzügliche Haftung an Glas zu erzielen ist.

Die guten Haftwerte bei den erfindungsgemäßen Kautschukhaftmischungen werden vor allem durch den Zusatz einer anorganischen Base zu dem an sich bekannten Haftsystem aus Resorcin und Hexamethylentetramin erzielt. Als anorganische Base ist insbesondere Calciumhydroxid geeignet, und zwar in Mengen von 1 bis 5 Gew.-Teilen, bezogen auf 100 Gew.-Teile Kautschuk. Das Calciumhydroxid zeichnet sich durch ein günstiges Einmischverhalten und eine gute Verteilung in der Kautschukmischung aus. Besonders gute Ergebnisse werden erzielt, wenn man als Beschleuniger Sulfenamide, wie z.B. Dicyclohexylbenzothiazylsulfenamid einsetzt.

Die Kautschukhaftmischungen können sowohl aus Naturkautschuk als auch aus synthetischen Kautschuken als auch aus Verschnitten daraus aufgebaut sein, doch sollte der Anteil des Naturkautschuks 50 % oder mehr betragen.

Bei der Herstellung von farbigen Kautschukhaftmischungen genügt es, 1 bis 3 Gew.-Teile Resorcin und 1 bis 2 Gew.-Teile Hexamethylentetramin einzusetzen, so daß sich eine Reduzierung dieser Stoffe gegenüber bekannten Kautschukhaftmischungen und damit eine Verbilligung der Mischung ergibt. Bei den hellen und farbigen Kautschukhaftmischungen können als Verstärkerfüllstoffe Metalloxide und/oder Silikate und/oder Karbonate eingesetzt werden. Besonders günstig ist es, Titandioxid als Füllstoff zu verwenden, während als Aktivator Zinkoxid in üblichen Mengen geeignet ist.

Die Erfindung läßt sich ebenfalls auf rußefüllte Kautschukhaftmischungen anwenden, wobei das Haftsystem aus 1 bis 6 Gew.-Teilen Resorcin und 1 bis 4 Gew.-Teilen Hexamethylentetramin besteht.

Es werden auch gute Haftwerte mit einer Mischung erzielt, die ausschließlich Naturkautschuk enthält und bei der 40 bis 60 Gew.-Teile Ruß mit 30 bis 10 Gew.-Teilen eines hellen Füllstoffes, z.B. mit Calciumsilikat verschnitten sind.

Nachfolgend werden in einer Tabelle fünf erfindungsgemäße Kautschukhaftmischungen aufgeführt, die allesamt gute Haftwerte an Metallen und an Glas aufweisen. Davon sind die ersten drei Mischungen als farbige Kautschukhaftmischungen ausgebildet, während es sich bei den letzten beiden um überwiegend oder vollständig rußefüllte Haftmischungen handelt.

Zur Überprüfung der Haftung wurden Probekörper in Form von 6 mm dicken Gummiplatten aus den einzelnen Mischungen hergestellt, wobei Drähte, Bleche und Gläser auf-und einvulkanisiert worden sind. Anschließend wurden die metallischen oder glasförmigen Körper mit Gewalt herausgezogen. Aufgrund der hohen Zugkräfte und der vorhandenen Bedeckung durch Gummi konnte auf sehr positive Haftwerte geschlossen werden.

## Tabelle

| | 1 | 2 | 3 | 4 | 5 | |
|---|---|---|---|---|---|---|
| Naturkautschuk | 100 | 50 | 50 | 100 | 100 | Gew.-T. |
| Polybutadien | - | 50 | - | - | - | |
| Nitrilkautschuk | - | - | 50 | - | - | |
| Titandioxid | 60 | 60 | 60 | - | - | |
| Calciumsilikat | - | - | - | 15 | - | |
| Ruß | - | - | - | 45 | 50 | |
| Zinkoxid | 8 | 8 | 8 | 8 | 8 | |
| org. Farbstoff | 5 | 5 | 5 | - | - | |
| Weichmacheröl | 20 | 20 | 20 | 5 | 5 | |

| | 1 | 2 | 3 | 4 | 5 | |
|---|---|---|---|---|---|---|
| Alterungsschutzmittel (ASM) | 1 | - | - | 1 | 1 | Gew.-T. |
| Klebharz | - | - | - | 1 | 1 | |
| Schwefel | 3 | 3 | 3 | 3 | 3 | |
| Hexamethylentetramin | 1.5 | 1.5 | 1.5 | 3 | 3 | |
| Resorcin | 2.5 | 2.5 | 2.5 | 5 | 5 | |
| Beschleuniger (DCBS) | 1.5 | 1.5 | 1.5 | 2 | 2 | |
| Calciumhydroxid | 2.5 | 2.5 | 2.5 | 2.5 | 2.5 | |

## Ansprüche

1. Farbige oder rußefüllte Kautschukhaftmischung zur Direktbindung an metallischen Körpern oder an Glas, auf der Grundlage von Natur-und/oder Synthesekautschuk, die Füllstoffe, Aktivatoren, Weichmacher, ein Vulkanisationsmittel und ein Haftsystem auf der Basis Resorcin/Hexamethylentetramin enthält, dadurch gekennzeichnet, daß die Kautschukhaftmischung als weiteren Bestandteil eine anorganische Base enthält und daß die Füllstoffe, die im Falle einer farbigen Kautschukhaftmischung aus Metalloxiden und/oder Silikaten und/oder Karbonaten bestehen, in einem Anteil von 20 bis 100 Gew.-Teilen, bezogen auf 100 Gew.-Teile Kautschuk, vorhanden sind.

2. Kautschukhaftmischung nach Anspruch 1, dadurch gekennzeichnet, daß als anorganische Base Calciumhydroxid eingesetzt ist.

3. Kautschukhaftmischung nach Anspruch 1 oder 2, dadurch gekennzeichnet, daß als anorganische Base 1 bis 5 Gew.-Teile Calciumhydroxid, bezogen auf 100 Gew.-Teile Kautschuk, eingesetzt sind.

4. Kautschukhaftmischung nach Anspruch 1, gekennzeichnet durch 1 bis 3 Gew.-Teile Sulfenamidbeschleuniger.

5. Kautschukhaftmischung nach Anspruch 1, dadurch gekennzeichnet, daß der Naturkautschukanteil am Gesamtkautschuk 50 % oder mehr beträgt.

6. Farbige Kautschukhaftmischung nach Anspruch 1, gekennzeichnet durch ein Haftsystem mit 1 bis 3 Gew.-Teilen Resorcin und 1 bis 2 Gew.-Teilen Hexamethylentetramin.

7. Farbige Kautschukhaftmischung nach Anspruch 1 oder 6, dadurch gekennzeichnet, daß als heller Füllstoff Titandioxid eingesetzt ist.

8. Rußgefüllte Kautschukhaftmischung nach Anspruch 1, dadurch gekennzeichnet, daß sie 1 bis 6 Gew.-Teile Resorcin und 1 bis 4 Gew.-Teile Hexamethylentetramin, bezogen auf 100 Gew.-Teile Kautschuk, enthält.

9. Rußgefüllte Kautschukhaftmischung nach Anspruch 1 oder 8, dadurch gekennzeichnet, daß sie als Füllstoff 40 bis 80 Gew.-Teile Ruß, bezogen auf 100 Gew.-Teile Kautschuk, enthält.

10. Rußgefüllte Haftmischung nach Anspruch 1 oder 9, dadurch gekennzeichnet, daß sie als Füllstoffe 40 bis 60.-Teile Ruß und 30 bis 10 Gew.-Teile eines hellen Füllstoffes, bezogen auf 100 Gew.-Teile Kautschuk, enthält.

<table>
<tr><td></td><td>Europäisches Patentamt</td><td>EUROPÄISCHER RECHERCHENBERICHT</td><td>Nummer der Anmeldung<br>EP 86 11 1317</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 359 877 (BAYER)<br>* Anspruch 8; Seite 13, Zeilen 11,12,20-23; Seite 14, Zeilen 9-11 *<br><br>--- | 1,4-10 | C 08 J 5/10<br>C 08 L 21/00<br>C 08 K 3/22 |
| X | DE-A-1 907 781 (CONTINENTAL GUMMI-WERKE)<br>* Anspruch 4; Beispiel, Kurve 2 *<br><br>--- | 1,4-10 | |
| Y | CHEMICAL ABSTRACTS, Band 97, Nr. 22, 29. November 1982, Seite 72, Zusammenfassung Nr. 183787g, Columbus, Ohio, US; & JP-A-82 98 532 (BRIDGESTONE TIRE CO., LTD) 18-06-1982<br>* Zusammenfassung *<br><br>--- | 1-10 | |
| Y | DE-A-2 750 836 (CONTINENTAL GUMMI-WERKE)<br>* Anspruch 1 *<br><br>----- | 1-10 | RECHERCHIERTE SACHGEBIETE (Int. Cl.4)<br><br>C 08 J |

Der vorliegende Recherchenbericht wurde für alle Patentansprüche erstellt.

| Recherchenort | Abschlußdatum der Recherche | Prüfer |
|---|---|---|
| DEN HAAG | 23-02-1987 | VAN HUMBEECK F.W.C. |